# EUROPÄISCHE PATENTSCHRIFT

(11) **EP 2 302 332 B1**
(45) Veröffentlichungstag und Bekanntmachung des Hinweises auf die Patenterteilung: **07.09.2016**
(21) Anmeldenummer: 10163093.7
(22) Anmeldetag: 18.05.2010
(51) Int. Cl.: G01D 5/347

(54) **Längenmesseinrichtung**
Length measuring device
Dispositif de mesure de longueur

(30) Priorität: 23.09.2009 DE 102009044917
(43) Veröffentlichungstag der Anmeldung: 30.03.2011
(73) Patentinhaber: Dr. Johannes Heidenhain GmbH, 83301 Traunreut (DE)
(72) Erfinder: Kummetz, Jens, 83278 Traunstein (DE); Boye, Tim, 83329 Waging am See (DE); Seichter, Martin, 83379 Wonneberg (DE); Geyermann, Dirk, 83365 Nußdorf (DE)

(56) Entgegenhaltungen:
- EP-A1- 1 731 877
- EP-A2- 0 736 750
- DE-A1- 4 320 728

## Beschreibung

Die Erfindung betrifft eine Längenmesseinrichtung nach dem Oberbegriff des Anspruchs 1.

Derartige Längenmesseinrichtungen, wie sie beispielsweise in der EP 1 004 855 B1 beschrieben sind, dienen zur Messung von Längen sowie Wegen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie eingesetzt.

Die Längenmesseinrichtung weist eine Baueinheit auf, welche aus einem Träger und einem Maßstab besteht. Der Träger ist vorgesehen, um den Maßstab zu stabilisieren und diesen damit besser handhabbar zu machen. Zum Anbau des Maßstabs an einen zu messenden Körper weist der Träger Mittel zur Befestigung an diesem zu messenden Körper auf, im Beispiel Bohrungen zum Verschrauben mit dem zu messenden Körper. Der Träger besteht aus einem Material, dessen Ausdehnungskoeffizient von dem Maßstab abweicht. Der Maßstab ist über Befestigungsmittel am Träger angebracht, um bei Temperaturänderungen eine möglichst reibungsfreie Verschiebung zwischen dem Träger und dem Maßstab aufgrund unterschiedlicher Längenausdehnungen zwischen dem Träger und dem Maßstab zu ermöglichen.

An einer einzigen Stelle, auch Fixpunkt genannt, ist der Maßstab starr mit dem Träger verbunden. Diese starre Kopplung erfolgt mittels Formschluss. An dieser Position (in Messrichtung betrachtet) erfolgt auch eine starre Befestigung des Trägers an dem zu messenden Körper.

Diese Konstruktion hat den Nachteil, dass Verspannungen des Trägers, z. B. beim Verschrauben mit dem zu messenden Körper oder bei Temperaturänderungen, zu Verlagerungen des Fixpunktes führen können, was zu Messungenauigkeiten führt.

Eine weitere gattungsbildende Längenmesseinrichtung ist in der EP 1 731 877 A1 beschrieben. Dabei ist der Maßstab an einem Profilteil längsbeweglich geführt und an einem Fixpunkt mit dem zu messenden Körper ortsfest verbunden.

Der Erfindung liegt die Aufgabe zugrunde, eine gut handzuhabende und stabile Längenmesseinrichtung zu schaffen, welche eine hohe Messgenauigkeit aufweist.

Diese Aufgabe wird erfindungsgemäß durch die Merkmale des Anspruchs 1 gelöst.

In den abhängigen Ansprüchen sind vorteilhafte Ausgestaltungen der Erfindung angegeben.

Gemäß der Erfindung weist die Längenmesseinrichtung eine Baueinheit, bestehend aus einem an einem Träger befestigten Maßstab auf. Der Maßstab ist mittels eines Befestigungsmittels am Träger befestigt, welches derart ausgebildet ist, dass bei Temperaturänderungen eine Längenausdehnung des Trägers relativ zum Maßstab in Messrichtung möglichst reibungsfrei und somit kräftefrei ermöglicht ist, der Maßstab und der Träger aber trotzdem als gemeinsame Baueinheit handhabbar ist. Der Träger stabilisiert dabei den Maßstab. Die Baueinheit ist an einem zu messenden Körper befestigbar, indem der Träger Befestigungsmittel zum Befestigen an diesem zu messenden Körper aufweist. Bei diesen Befestigungsmitteln kann es sich insbesondere um Schrauben handeln.

Das Befestigungsmittel, welches den Maßstab am Träger in Messrichtung verschiebbar lagert, ist eine Zwischenschicht, welche den Maßstab haftend am Träger hält. Diese Zwischenschicht ist beispielsweise als Flüssigkeitsfilm ausgebildet, über den der Maßstab mittels Kapillarwirkung gegen eine Fläche des Trägers gezogen wird.

Zur Bildung eines thermischen Nullpunktes weist die Längenmesseinrichtung eine Halterung auf, mit welcher der Maßstab an einem Fixpunkt unter Umgehung des Trägers an dem zu messenden Körper befestigbar ist. Unter Umgehung des Trägers bedeutet dabei, dass die Halterung den Träger nicht berührt und keine Zwangskräfte, wie z. B. Klemmkräfte, zwischen Maßstab und Träger ausübt. Auch an der Position des Fixpunktes - in Messrichtung betrachtet - ist der Maßstab unter Zwischenschaltung des in Messrichtung nachgiebigen Befestigungsmittels am Träger unterstützend gehalten. Ein besonders stabiler und schwingungsfester Aufbau ergibt sich, wenn das nachgiebige Befestigungsmittel eine Zwischenschicht ist, welche den Maßstab über seine gesamte Länge einschließlich des Fixpunktes flächig am Träger haftend hält, wobei der Träger den Maßstab somit über die gesamte Länge, einschließlich des Fixpunktes unterstützt.

Anzumerken ist, dass zur Ausbildung eines thermischen Nullpunktes des Maßstabs dieser nur an einer einzigen Position - in Messrichtung betrachtet - mit dem zu messenden Körper zu fixieren ist. An allen weiteren Positionen ist der Maßstab am zu messenden Körper in Messrichtung entkoppelt zu befestigen.

Die Halterung ist einerseits am Fixpunkt des Maßstabs ortsfest mit diesem gekoppelt, insbesondere durch seitliches Einspannen an einander gegenüberliegenden Längsseiten des Maßstabes und andererseits ist diese Halterung wiederum am zu messenden Körper ortsfest fixierbar.

Die Konstruktion ist besonders vorteilhaft, wenn der Maßstab aus einem Material mit einer sogenannten Nullausdehnung besteht, also aus einem Material mit einem thermischen Längenausdehnungskoeffizient kleiner als 0,1 x 10⁻⁶K⁻¹ besteht und der Träger demgegenüber einen größeren thermischen Längenausdehnungskoeffizienten aufweist. Dabei wird berücksichtigt, dass
- eine hochgenaue und temperaturstabile Positionsmessung erreicht wird, wenn die Messteilung auf einem temperaturstabilen Maßstab aufgebracht ist,
- eine Stabilisierung des Maßstabs durch einen Träger aus einem kostengünstigeren Material erreichbar ist,
- der thermische Ausdehnungskoeffizient des Trägers an den thermischen Ausdehnungskoeffizienten des zu messenden Körpers angepasst ist.

Die Erfindung wird mit Hilfe von Ausführungsbeispielen näher erläutert.

Dabei zeigt
- Figur 1: eine erste Längenmesseinrichtung;
- Figur 2: einen Querschnitt II-II der Längenmesseinrichtung gemäß Figur 1;
- Figur 3: eine schematische Draufsicht auf die Längenmesseinrichtung gemäß Figur 1;
- Figur 4: eine perspektivische Ansicht der Längenmesseinrichtung;
- Figur 5: eine Draufsicht einer weiteren Längenmesseinrichtung am Ort eines Fixpunktes mit Stoffschluss;
- Figur 6: einen Schnitt VI-VI der weiteren Längenmesseinrichtung gemäß Figur 5;
- Figur 7: eine Draufsicht einer weiteren Längenmesseinrichtung am Ort eines Fixpunktes mit Formschluss, und
- Figur 8: einen Schnitt VIII-VIII der Längenmesseinrichtung gemäß Figur 7.

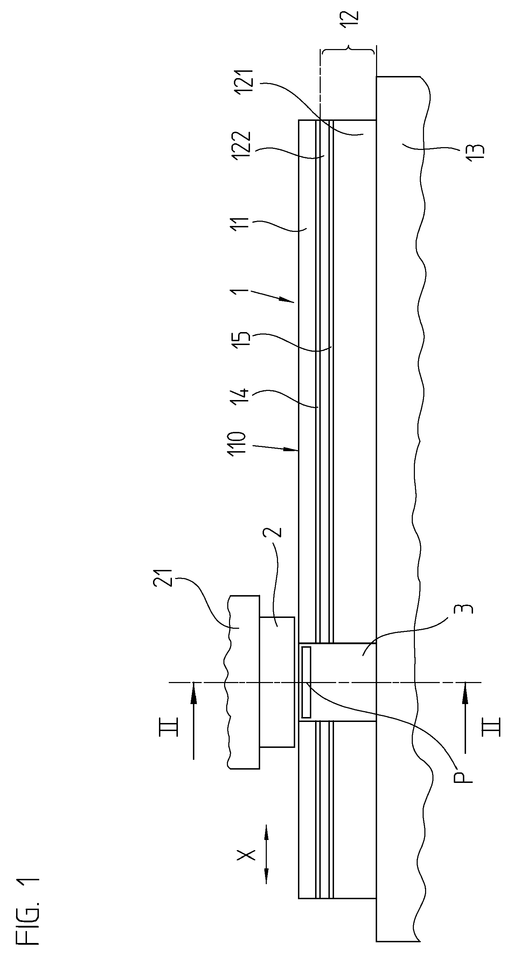

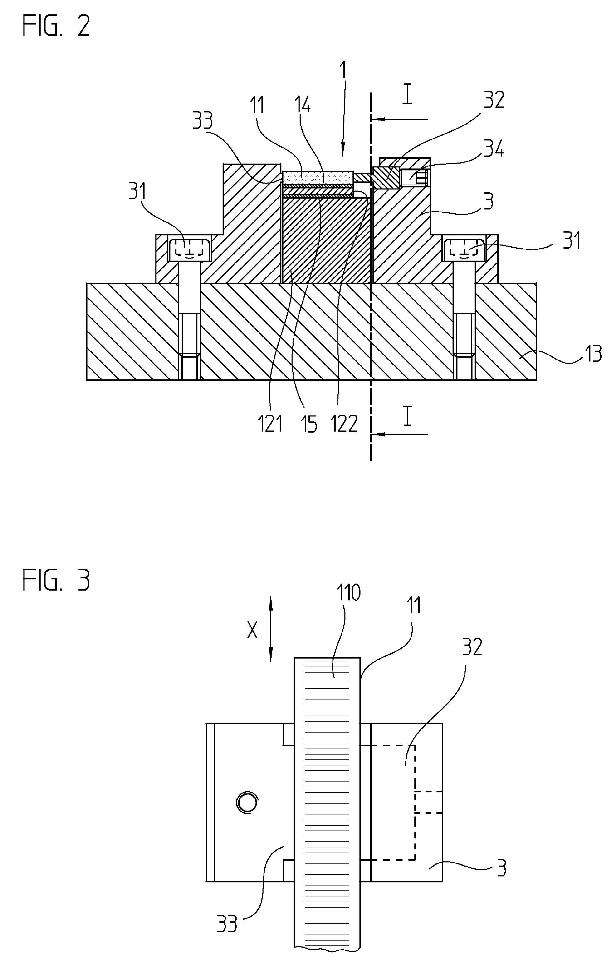

In den Figuren 1 bis 4 ist ein erstes Ausführungsbeispiel der Erfindung im Detail dargestellt. Die Figur 1 zeigt dabei eine Ansicht der Längenmesseinrichtung in Messrichtung X verlaufend, nämlich einen Längsschnitt I-I der Ansicht aus Figur 2 und Figur 2 einen Querschnitt II-II dieser Längenmesseinrichtung gemäß Figur 1 ohne Abtasteinheit.

Die Längenmesseinrichtung besteht aus einer ersten Baueinheit 1, mit einem an einem Träger 12 angebrachten Maßstab 11 sowie einer zweiten Baueinheit, nachfolgend Abtasteinheit 2 genannt. Zur Positionsmessung in Messrichtung X ist die Baueinheit 1 mittels des Trägers 12 an einem ersten zu messenden Körper 13, beispielsweise dem Bett einer Werkzeugmaschine, befestigt und die Abtasteinheit 2 an einem zweiten zu messenden Körper 21, beispielsweise dem Schlitten einer Werkzeugmaschine, befestigt. Die Abtasteinheit 2 ist dabei relativ zur Baueinheit 1 in Messrichtung X verschiebbar.

Der Maßstab 11 besteht aus einem Material mit einem vernachlässigbaren thermischen Ausdehnungskoeffizient, wobei α im Temperaturbereich von 0° bis 50° vorzugsweise kleiner als 0,1 x 10⁻⁶K⁻¹ ist. Diese Materialien sind insbesondere Gläser mit sogenannter Nullausdehnung, die unter den Handelsnamen ZERODUR, SITAL und ULE bekannt sind. Diese Gläser haben gegenüber von Metallen den Vorteil, dass mit üblichen Herstellverfahren eine gute optische Oberfläche erzeugbar ist, auf die eine optisch abtastbare Messteilung 110 aufbringbar ist.

Im Beispiel trägt dieser Maßstab 11 auf seiner Oberseite eine lichtelektrisch abtastbare Messteilung 110 in Form eines im Auflicht abtastbaren Strichgitters mit einer Teilungsperiode von einigen nm. Diese Messteilung 110 ist ein reflektierendes Phasengitter oder besteht aus in Messrichtung X abwechselnd angeordneten reflektierenden und nichtreflektierenden Bereichen. Diese Messteilung 110 wird zur Positionsmessung von der nur schematisch dargestellten Abtasteinheit 2 abgetastet.

Der Maßstab 11 ist am Träger 12 mittel eines ersten Befestigungsmittels befestigt, das derart ausgebildet ist, dass eine Längenausdehnung des Trägers 12 relativ zum Maßstab 11 ungehindert ermöglicht wird. In vorteilhafter Weise ist dieses Befestigungsmittel eine viskose Zwischenschicht mit geringer Schersteifigkeit in Messrichtung X, durch die der Maßstab 11 am Träger 12 haftend gehalten wird. Im dargestellten Beispiel ist diese Zwischenschicht ein Flüssigkeitsfilm 14, über den der Maßstab 11 mittels Kapillarwirkung gegen eine Fläche des Trägers 12 gezogen ist und auf dem Flüssigkeitsfilm 14 flächig aufliegt. Dieser Flüssigkeitsfilm 14 hält den Maßstab 11 einerseits sicher am Träger 12 und lässt aber andererseits Verschiebungen des Trägers 12 gegenüber dem Maßstab 11, hervorgerufen durch temperaturbedingte Längenänderungen, reibungsfrei und somit kräftefrei zu. Als Material für den Flüssigkeitsfilm 14 eignet sich besonders Silikonöl.

Der Träger 12 ist im Beispiel biegesteif und sandwichartig bzw. schichtartig aufgebaut, besteht also aus mehreren übereinander angeordneten Trägerteilen, insbesondere einem ersten Trägerteil 121 und einem zweiten Trägerteil 122. Das erste Trägerteil 121 ist eigenstabil und biegesteif ausgestaltet und besteht aus Metall, insbesondere Stahl mit einem thermischen Ausdehnungskoeffizient α im Temperaturbereich von 0° bis 50° von ca. 12 x 10⁻⁶K⁻¹. Dieses erste Trägerteil 121 ist an dem ersten zu messenden Körper 13 befestigbar, beispielsweise durch Schrauben oder Kleben. Hierzu weist es an seiner dem zu messenden Körper 13 zugewandten Seite eine über die Messlänge reichende Befestigungsfläche auf, mit der er großflächig und somit vibrationsfest am zu messenden Körper 13 befestigbar ist.

Auf diesem ersten Trägerteil 121 ist ein zweites Trägerteil 122 mittels eines zweiten Befestigungsmittels befestigt. In vorteilhafter Weise ist dieses zweite Befestigungsmittel wiederum eine viskose Zwischenschicht mit geringer Scherfestigkeit in Messrichtung X, beispielsweise in Form eines hochelastischen Klebstoffes 15. Dieses zweite Trägerteil 122 fungiert als Zwischenträger und bildet die Kontaktfläche für den Flüssigkeitsfilm 14. Zu diesem Zweck ist das zweite Trägerteil 122 eine Glaslamelle, beispielsweise aus Floatglas mit einem thermischen Ausdehnungskoeffizient α im Temperaturbereich von 0° bis 50° von ca. 7 bis 9 x 10⁻⁶K⁻¹. Besonders vorteilhaft ist die Verwendung eines Maßstabs 11 aus Glas bzw. Glaskeramik und eines zweiten Trägers 122 aus Glas, da das Vorsehen des Flüssigkeitsfilms 14 zwischen zwei Glasflächen den Vorteil hat, dass der Maßstab 11 besonders homogen vollfächig und somit vibrationsfest gelagert werden kann, was die Messgenauigkeit erhöht.

Der sandwichartige Aufbau des Trägers 12 hat auch den Vorteil, dass unterschiedliche Längenausdehnungen, hervorgerufen durch Temperaturänderungen, nicht ausschließlich durch ein einziges Befestigungsmittel ausgeglichen werden müssen. Hierzu sind die thermischen Ausdehnungskoeffizienten der verwendeten Materialien ausgehend vom Maßstab 11 bis zum ersten Trägerteil 121 graduell abgestuft. Das heißt, dass der thermische Ausdehnungskoeffizient des Maßstabs 11 kleiner ist als der thermische Ausdehnungskoeffizient des zweiten Trägerteils 122 und der thermische Ausdehnungskoeffizient des zweiten Trägerteils 122 wiederum kleiner ist als der thermische Ausdehnungskoeffizient des ersten Trägerteils 121. Unterschiedliche Längenänderungen zwischen dem Maßstab 11 und dem zweiten Trägerteil 122 werden durch die ersten Befestigungsmittel, beispielsweise in Form der Zwischenschicht, insbesondere dem Flüssigkeitsfilm 14, reibungsfrei ausgeglichen und unterschiedliche Längenänderungen zwischen dem zweiten Trägerteil 122 und dem ersten Trägerteil 121 werden durch die zweiten Befestigungsmittel, beispielsweise in Form der Zwischenschicht, insbesondere dem elastischen Klebstoff 15, ausgeglichen.

In nicht gezeigter Weise kann der Träger 12 aber auch einteilig ausgeführt sein.

Zur Bildung eines sogenannten Nullpunktes des Maßstabs 11 ist der Maßstab 11 an einem Fixpunkt P mittels einer Halterung 3 am zu messenden Körper 13 befestigbar, beispielsweise durch Schrauben 31 und / oder Verstiften. Die Halterung 3 ist derart ausgebildet, dass einerseits allein der Maßstab 11 am Fixpunkt P daran ortsfest fixiert ist und andererseits unter Umgehung des Trägers 12 diese Halterung 3 wiederum an einer Position in Messrichtung X am zu messenden Körper 13 ortsfest fixierbar ist. Die Halterung 3 bildet somit eine Art Umgriff vom Maßstab ausgehend zum zu messenden Körper 13. Die in Messrichtung X wirkende Entkopplung zwischen dem Maßstab 11 und dem Träger 12, im Beispiel durch den Flüssigkeitsfilm 14 realisiert, bleibt durch diese Konstruktion des Halters 3 auch am Fixpunkt P erhalten. Die Halterung 3 ist hierzu derart ausgebildet, dass sie den Träger 12 nicht berührt und keine Zwangskräfte, wie Klemmkräfte, zwischen Maßstab 11 und Träger 12 ausübt. Durch diese Maßnahme wird zwischen dem Maßstab 11 und dem zu messenden Objekt 13 ein thermisch stabiler Fixpunkt in Messrichtung X geschaffen, der vom Träger 12 völlig entkoppelt ist.

Wie der Querschnitt in Figur 2 zeigt, ist es besonders vorteilhaft, wenn die Befestigung der Halterung 3 über zumindest eine Schraube 31 oder einen Stift am gleichen Ort - in Messrichtung X betrachtet - erfolgt, wie die Fixierung des Maßstabs 11 mit der Halterung 3.

Der Maßstab 11 ist am Fixpunkt P an der Halterung 3 ortsfest fixiert und die Halterung 3 ist seitlich neben dem Träger 12 zum zu messenden Körper 13 verlaufend angeordnet. Zur Vermeidung von Zwangskräften auf den Träger 12 verläuft die Halterung 3 auch seitlich vom Träger 12 beabstandet. Seitlich definiert eine Richtung senkrecht zur Messrichtung X und senkrecht zu der Richtung, in der der Maßstab 11, die Zwischenschicht 14 und der Träger 12 aufeinanderfolgend angeordnet sind.

Auch an der Position des Fixpunktes P - in Messrichtung X betrachtet - ist der Maßstab 11 unter Zwischenschaltung der haftend ausgebildeten Zwischenschicht, im Beispiel als Flüssigkeitsfilm 14 ausgeführt, am Träger 12 unterstützend gehalten. Es ergibt sich ein besonders stabiler und schwingungsfester Aufbau, da der Maßstab 11 über seine gesamte Länge einschließlich des Fixpunktes P flächig am Träger 12 haftend gehaltert ist, wobei der Träger 12 den Maßstab 11 somit über die gesamte Länge, einschließlich des Fixpunktes P, unterstützt.

Die ortsfeste Fixierung der Halterung 3 mit dem Maßstab 11 erfolgt durch Kraftschluss, indem er an seinen beiden parallel zueinander verlaufenden Längsseiten eingespannt wird. Dieses Einspannen des Maßstabes 11 ist realisiert, indem ein Spannelement 32 an einer der Längsseiten des Maßstabs 11 angreift und den Maßstab 11 mit der gegenüberliegenden Längsseite an einen Anschlag 33 drängt. Das Spannelement 32 ist als Schieber ausgeführt, der mittels zumindest einer Schraube 34 quer zur Messrichtung X verschiebbar ist, um den Maßstab 11 ortsfest an der Halterung 3 durch Umklammern an einander gegenüberliegenden Stellen zu klemmen.

Figur 3 zeigt schematisch eine Draufsicht auf die vorhergehend beschriebene Längenmesseinrichtung.

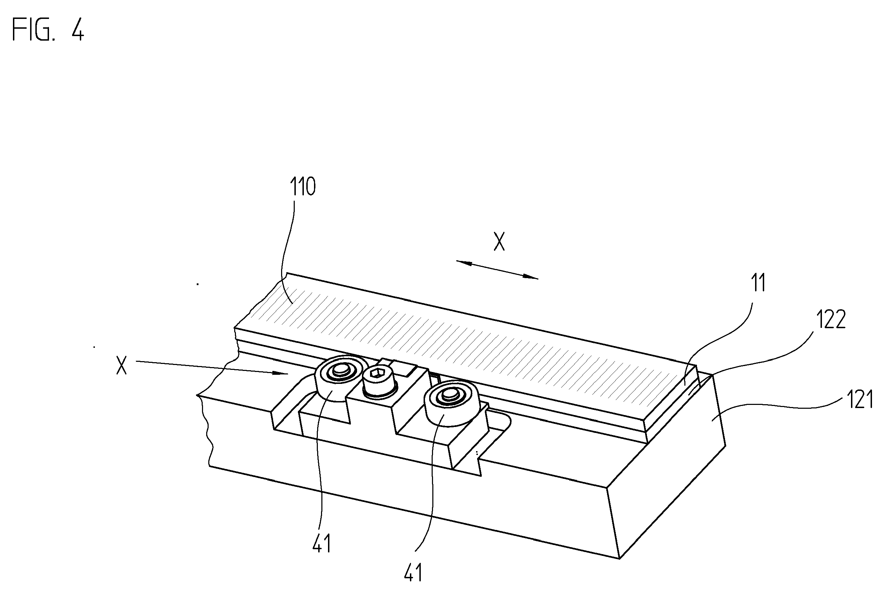

Figur 4 zeigt schematisch eine perspektivische Ansicht der Längenmesseinrichtung an einem Ort, der vom hier nicht dargestellten Fixpunkt in Messrichtung beabstandet angeordnet ist. Dargestellt ist die Baueinheit 1, bestehend aus dem Träger 12, also dem ersten Trägerteil 121 und dem zweiten Trägerteil 122, sowie dem Maßstab 11. Aus Gründen der Übersichtlichkeit sind die Zwischenschichten 14 und 15 nicht dargestellt. Vom Fixpunkt in Messrichtung X entfernt ist eine Lagerung 4 des Maßstabs 11 angeordnet. Diese Lagerung 11 besteht im Beispiel aus einer Rollenlagerung mit Führungsrollen 41, die den Maßstab 11 an einer Längsseite kontaktieren, so dass eine Längenänderung des Maßstabs 11 relativ zum Träger 12 möglichst reibungsfrei ermöglicht wird. Die Lagerung 4 bildet somit eine reibungsarme Längsführung zwischen dem Träger 12 und dem Maßstab 11. Zur Ausrichtung des Maßstabs 11 können Mittel vorgesehen sein, welche den Maßstab 11 an die Führungsrollen 41 drängen. Diese Andruckkraft kann in bekannter Weise durch Federkraft oder durch Magnetkraft erzeugt werden, wie beispielsweise in der EP 1 004 855 B1 beschrieben.

Nachfolgend werden Alternativen zu der obigen Ausführungsform näher beschrieben, wobei für die Teile Maßstab, Träger, Fixpunkt und Halterung jeweils die gleichen Bezugszeichen wie beim oben erläuterten Ausführungsbeispiel verwendet werden, da sich diesbezüglich die Konstruktion nicht unterscheidet.

Alternativ zu einem Kraftschluss zwischen dem Maßstab 11 und der Halterung 3 am Fixpunkt P kann auch ein Stoffschluss oder ein Formschluss zur ortsfesten Fixierung realisiert werden.

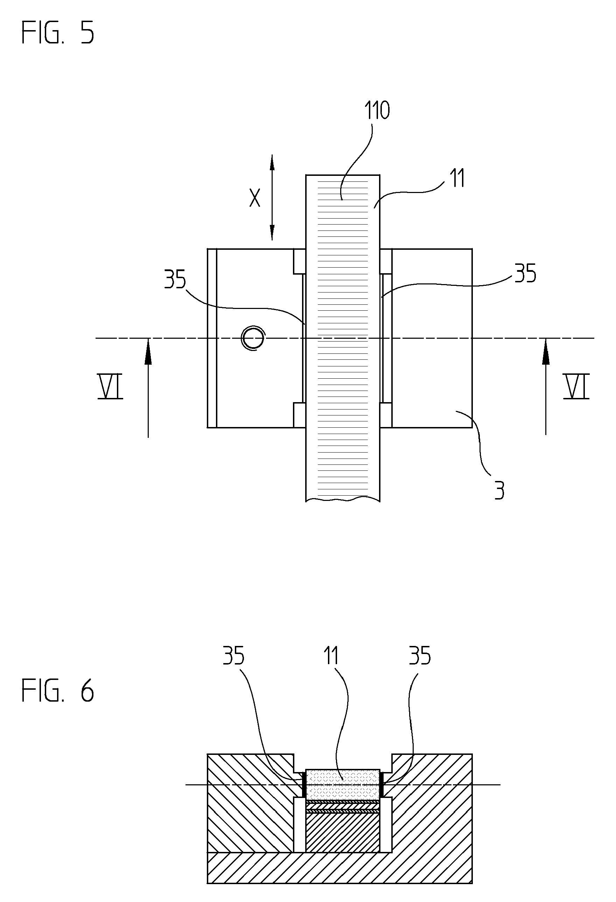

Die Figuren 5 und 6 zeigen schematisch einen Stoffschluss, indem der Maßstab 11 am Fixpunkt P mittels eines Klebstoffes 35 an der Halterung 3 ortsfest fixiert ist und die Halterung 3 wiederum unter Umgehung des Trägers 12 am zu messenden Körper 13 befestigbar ist.

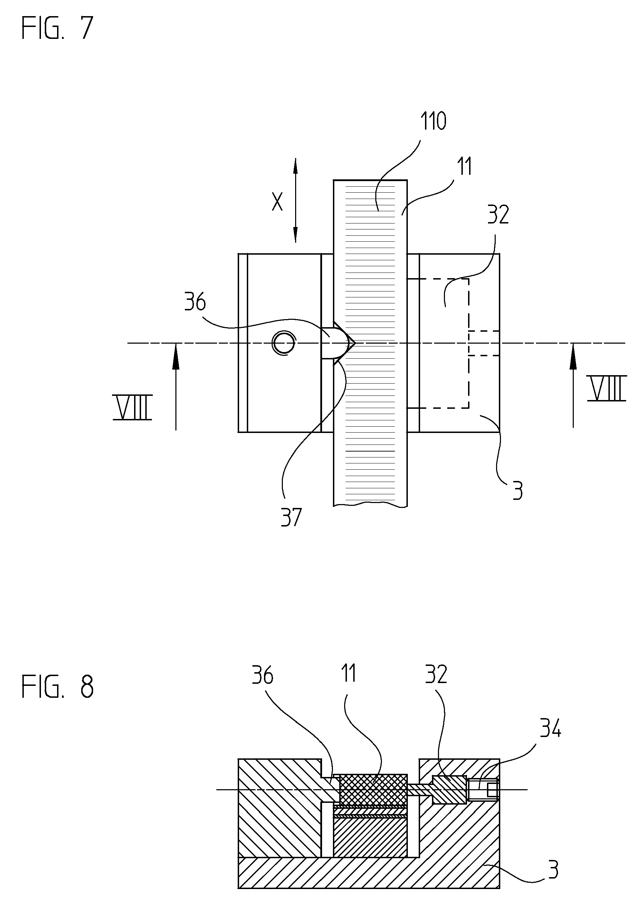

Die Figuren 7 und 8 zeigen schematisch einen Formschluss, indem der Maßstab 11 am Fixpunkt P mittels eines formschlüssigen Eingriffs an der Halterung 3 ortsfest fixiert ist und die Halterung 3 wiederum unter Umgehung des Trägers 12 am zu messenden Körper 13 ortsfest befestigbar ist. Im Beispiel greift ein Vorsprung 36 der Halterung 3 in eine Vertiefung 37 des Maßstabs 11 ein. Der somit erzeugte Formschluss wirkt in Messrichtung X ortsfest fixierend.

Bei allen Ausgestaltungen der ortsfesten Fixierung der Halterung 3 mit dem Maßstab 11 ist es besonders vorteilhaft, wenn die Fixierung an beiden Längsseiten des Maßstabs 11 symmetrisch zur Mitte des Maßstabs 11 und zur Messteilung 110 erfolgt. Die Haltekräfte der lokalen Verbindung wirken somit symmetrisch an dem Maßstab 11.

Weiterhin ist es vorteilhaft, wenn die Fixierung der Halterung 3 am Maßstab 11 bezogen auf die Höhe des Maßstabs 11 mittig erfolgt, also in der neutralen Ebene des Maßstabs 11.

## Patentansprüche

1. Längenmesseinrichtung
mit einer Baueinheit (1), bestehend aus einem Träger (12), an dem ein eine Messteilung (110) tragender Maßstab (11) über ein Befestigungsmittel (14) befestigt ist,
wobei das Befestigungsmittel (14) derart ausgebildet ist, dass bei Temperaturänderungen eine temperaturbedingte Längenausdehnung des Trägers (12) relativ zum Maßstab (11) ermöglicht ist, und
wobei die Baueinheit (1) mittels des Trägers (12) an einem zu messenden Körper (13) befestigbar ist,
**dadurch gekennzeichnet, dass** die Längenmesseinrichtung an einer Position in Messrichtung (X) eine Halterung (3) aufweist, mit der der Maßstab (11) an einem Fixpunkt (P) unter Umgehung des Trägers (12) an dem zu messenden Körper (13) befestigbar ist, und
dass das Befestigungsmittel eine Zwischenschicht (14) ist, über die der Maßstab (11) über seine gesamte Länge einschließlich des Fixpunktes (P) flächig am Träger (12) haftend gehaltert ist, wodurch der Träger (12) den Maßstab (11) über die gesamte Länge, einschließlich des Fixpunktes (P), unterstützt, wobei
der Maßstab (11) am Fixpunkt (P) an der Halterung (3) ortsfest fixiert ist und die Halterung (3) seitlich neben dem Träger (12) und seitlich vom Träger (12) beabstandet zum zu messenden Körper (13) verlaufend angeordnet ist, wobei seitlich eine Richtung definiert, die senkrecht zur Messrichtung (X) und senkrecht zu der Richtung verläuft, in der der Maßstab (11), die Zwischenschicht (14) und der Träger (12) aufeinanderfolgend angeordnet sind.

2. Längenmesseinrichtung nach Anspruch 1, **dadurch gekennzeichnet, dass** der Träger (12) einen vom Maßstab (11) abweichenden thermischen Ausdehnungskoeffizienten besitzt.

3. Längenmesseinrichtung nach Anspruch 2, **dadurch gekennzeichnet, dass** der Maßstab (11) aus einem Material mit einem thermischen Längenausdehnungskoeffizient kleiner als 0,1 x 10⁻⁶K⁻¹ besteht und der Träger (12) demgegenüber einen größeren thermischen Längenausdehnungskoeffizienten aufweist.

4. Längenmesseinrichtung nach Anspruch 3, **dadurch gekennzeichnet, dass** der Träger (12) aus mehreren Trägerteilen (121, 122) besteht, die derart miteinander verbunden sind, dass bei Temperaturänderungen eine Längenausdehnung zwischen den mehreren Trägerteilen (121, 122) ermöglicht ist, wobei der thermische Längenausdehnungskoeffizient des Trägerteils (122), das mit dem Maßstab (11) verbunden ist, kleiner ist als der thermische Längenausdehnungskoeffizient des Trägerteils (121), das an dem zu messenden Körper (13) befestigbar ist.

5. Längenmesseinrichtung nach einem der vorhergehenden Ansprüche, **dadurch gekennzeichnet, dass** die Zwischenschicht (14) ein Flüssigkeitsfilm ist.

6. Längenmesseinrichtung nach einem der vorhergehenden Ansprüche, **dadurch gekennzeichnet, dass** die Halterung (3) derart ausgebildet ist, dass sie am Fixpunkt (P) einen Formschluss zwischen dem Maßstab (11) und der Halterung (3) bewirkt.

7. Längenmesseinrichtung nach einem der vorhergehenden Ansprüche 1 bis 5, **dadurch gekennzeichnet, dass** die Halterung (3) derart ausgebildet ist, dass sie am Fixpunkt (P) einen Kraftschluss zwischen dem Maßstab (11) und der Halterung (3) bewirkt.

8. Längenmesseinrichtung nach einem der vorhergehenden Ansprüche 1 bis 5, **dadurch gekennzeichnet, dass** die Halterung (3) derart ausgebildet ist, dass sie am Fixpunkt (P) einen Stoffschluss zwischen dem Maßstab (11) und der Halterung (3) bewirkt.

## Claims

1. Length measuring device
having a modular unit (1) consisting of a support (12) on which there is attached, via an attachment means (14), a scale (11) bearing a measurement graduation (110),
wherein the attachment means (14) is designed so as to allow, in the event of temperature changes, a temperature-induced linear expansion of the support (12) relative to the scale (11), and
wherein the modular unit (1) can be attached, by means of the support (12), to a body (13) that is to be measured,
**characterized in that** the length measuring device has, at a position in the measurement direction (X), a holder (3) by means of which the scale (11) can be attached to the body (13) that is to be measured at a fixing point (P), bypassing the support (12), and
**in that** the attachment means is an intermediate layer (14) by means of which the scale (11) is held areally on the support (12) in an adhesive manner over its entire length including the fixing point (P), such that the support (12) supports the scale (11) over the entire length, including the fixing point (P), wherein
the scale (11) is positionally fixed to the holder (3) at the fixing point (P), and the holder (3) is arranged such that it runs laterally next to the support (12) and is laterally spaced apart, by the support (12), from the body (13) that is to be measured, wherein laterally a direction is defined that runs perpendicular to the measurement direction (X) and perpendicular to that direction in which the scale (11), the intermediate layer (14) and the support (12) are arranged in sequence.

2. Length measuring device according to Claim 1, **characterized in that** the coefficient of thermal expansion of the support (12) is different to that of the scale (11).

3. Length measuring device according to Claim 2, **characterized in that** the scale (11) is made of a material having a coefficient of linear thermal expansion less than 0.1×10⁻⁶K⁻¹ and the support (12), by contrast, has a greater coefficient of linear thermal expansion.

4. Length measuring device according to Claim 3, **characterized in that** the support (12) consists of multiple support parts (121, 122) that are connected to one another so as to permit, in the event of temperature changes, linear expansion between the multiple support parts (121, 122), wherein the coefficient of linear thermal expansion of that support part (122) which is connected to the scale (11) is smaller than the coefficient of linear thermal expansion of that support part (121) which can be attached to the body (13) to be measured.

5. Length measuring device according to one of the preceding claims, **characterized in that** the intermediate layer (14) is a liquid film.

6. Length measuring device according to one of the preceding claims, **characterized in that** the holder (3) is designed such that it effects, at the fixing point (P), a form fit between the scale (11) and the holder (3).

7. Length measuring device according to one of the preceding Claims 1 to 5, **characterized in that** the holder (3) is designed such that it effects, at the fixing point (P), a force fit between the scale (11) and the holder (3).

8. Length measuring device according to one of the preceding Claims 1 to 5, **characterized in that** the holder (3) is designed such that it effects, at the fixing point (P), a cohesive connection between the scale (11) and the holder (3).

## Revendications

1. Dispositif de mesure de longueur avec une unité de construction (1), se composant d'un support (12) sur lequel une règle de mesure (11) portant une graduation de mesure (110) est fixée par un moyen de fixation (14),
dans lequel le moyen de fixation (14) est réalisé de telle manière que lors de variations de la température une dilatation longitudinale du support (12) en fonction de la température par rapport à la règle graduée (11) soit permise, et
dans lequel l'unité de construction (1) peut être fixée sur un corps à mesurer (13) au moyen du support (12) **caractérisé en ce que** le dispositif de mesure de longueur présente à une position dans la direction de mesure (X) un appui (3), avec lequel la règle graduée (11) peut être fixée sur le corps à mesurer (13) en un point fixe (P) en contournant le support (12), et
**en ce que** le moyen de fixation est une couche intermédiaire (14), par laquelle la règle graduée (11) est maintenue sur toute sa longueur y compris le point fixe (P) par adhérence à plat sur le support (12), le support (12) soutenant ainsi la règle graduée (11) sur toute sa longueur y compris le point fixe (P),
dans lequel la règle graduée (11) est fixée localement au point fixe (P) sur l'appui (3) et l'appui (3) est disposé en étant situé latéralement à côté du support (12) et espacé latéralement du support (12) vers le corps à mesurer (13), définissant latéralement une direction, qui est perpendiculaire à la direction de mesure (X) et perpendiculaire à la direction, dans laquelle la règle graduée (11), la couche intermédiaire (14) et le support (12) sont disposés l'un au-dessus de l'autre.

2. Dispositif de mesure de longueur selon la revendication 1, **caractérisé en ce que** le support (12) possède un coefficient de dilatation thermique différent de la règle graduée (11).

3. Dispositif de mesure de longueur selon la revendication 2, **caractérisé en ce que** la règle graduée (11) se compose d'un matériau possédant un coefficient de dilatation thermique en longueur inférieur à 0,1 x 10⁻⁶ K⁻¹ et le support (12) présente au contraire un coefficient de dilatation thermique en longueur plus élevé.

4. Dispositif de mesure de longueur selon la revendication 3, **caractérisé en ce que** le support (12) se compose de plusieurs parties de support (121, 122), qui sont assemblées l'une à l'autre de telle manière que, lors de variations de la température, une dilatation longitudinale entre les différentes parties de support (121, 122) soit permise, dans lequel le coefficient de dilatation thermique en longueur de la partie de support (122), qui est assemblée à la règle graduée (11), est inférieur au coefficient de dilatation thermique en longueur de la partie de support (121), qui peut être fixée sur le corps à mesurer (13).

5. Dispositif de mesure de longueur selon l'une quelconque des revendications précédentes, **caractérisé en ce que** la couche intermédiaire (14) est un film de liquide.

6. Dispositif de mesure de longueur selon l'une quelconque des revendications précédentes, **caractérisé en ce que** l'appui (3) est réalisé de telle manière qu'il forme au point fixe (P) une liaison par emboîtement entre la règle graduée (11) et l'appui (3).

7. Dispositif de mesure de longueur selon l'une quelconque des revendications 1 à 5, **caractérisé en ce que** l'appui (3) est réalisé de telle manière qu'il forme au point fixe (P) une liaison par serrage entre la règle graduée (11) et l'appui (3).

8. Dispositif de mesure de longueur selon l'une quelconque des revendications 1 à 5, **caractérisé en ce que** l'appui (3) est réalisé de telle manière qu'il forme au point fixe (P) une liaison matérielle entre la règle graduée (11) et l'appui (3).
